(19) **Europäisches Patentamt / European Patent Office / Office européen des brevets**

(11) **EP 3 166 056 A1**

(12) # EUROPEAN PATENT APPLICATION

(43) Date of publication:
10.05.2017 Bulletin 2017/19

(21) Application number: 16196404.4

(22) Date of filing: 28.10.2016

(51) Int Cl.:
$G06Q\ 10/06^{(2012.01)}$ $G06Q\ 90/00^{(2006.01)}$

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 04.11.2015 US 201514932065

(71) Applicant: Schneider Electric IT Corporation
West Kingston, RI 02892 (US)

(72) Inventors:
• BARRETT, Enda
Salthill, Galway (IE)
• O'TOOLE, Peter
Terryland, Co., Galway (IE)

(74) Representative: Zerbi, Guido Maria
Murgitroyd & Company
Piazza Borromeo, 12
20123 Milano (IT)

(54) **SYSTEMS AND METHODS FOR AN ENVIRONMENTAL EVENT AND TASK MANAGER**

(57) Systems and methods are provided for an environmental event and task manager which receive environmental sensor data from an external network, determine a task based on the environmental sensor data received from the external network, calculate a user fitness metric for a user named on the environmental sensor data received through the communications interface and user information from the memory, assign the task to an assigned user based on the user fitness metric, and transmit an alert to the assigned user.

FIG. 1

**Description**

BACKGROUND

Field of Invention

Embodiments of the present invention relate generally to systems and methods for management of environmental events and more specifically for allocation of a task to a user to manage an environmental event.

Discussion of Related Art

Dwellings today have a variety of amenities and while providing modem conveniences, also have the ability to produce unwanted environmental events as well. In an optimal situation an occupant will be in the dwelling to witness such an unwanted environmental event and be able to take action on it as the situation warrants. However, as we know from common experience it is not a typical scenario where an occupant is in a dwelling to deal with such a situation, or even if within the dwelling, an environmental event is occurring in another portion or is precluded from open view. In these cases to mitigate any corresponding risk from such an environmental event, an occupant must act in a timely fashion appropriate for the environmental event type.

A variety of environmental sensors are available which provide discrete measurements of environmental occurrences. Modem day examples may include temperature sensors associated with a thermostat, or an ability to detect conductive fluid, such as water, through a leak sensor. These discrete sensors are generally monitored individually and may ultimately report to the dwelling occupant to provide a status and data related to any adverse event.

As will be demonstrated, such disparate systems are not adequate for robustly detecting or alerting an occupant to what may be occurring at a given time. It is necessary for such an environmental event and task manager to receive environmental data and have an understanding both of the environment but also of the occupants themselves to correctly request the appropriate action in the appropriate timeframe for such events.

SUMMARY

Aspects of the present invention relate generally to systems and methods for an environmental event and task manager. Embodiments of an environmental event and task manager comprise a communications interface configured to communicate with an external network, a memory capable of storing user information for a plurality of users, and a processor in communication with the communication interface and memory. This processor may be configured to receive environmental sensor data from the external network, receive dynamic user data from the external network, determine a task based on the environmental sensor data and dynamic user data received from the external network, calculate a user fitness metric for a user named on the environmental sensor data received through the communications interface and user information from the memory, assign the task to an assigned user based on the user fitness metric and transmit an alert to the assigned user.

Principles of the invention allow the environmental event and task manager to be configured such that the user information may include at least one of task completion ratio, capability, spatial distance, response time, current count, task completion ratio, task source, task score, user selection, or task type. According to various embodiments, the processor may be further configured to update a user profile using a plurality of the user fitness metrics.

Principles of the invention allow the environmental event and task manager to be further configured to receive environmental sensor data types by one of temperature, humidity, ambient light, sound, smoke, carbon monoxide, motion, non-conductive fluids, conductive fluids, power, vibration, or any combination thereof. A processor may be further configured to correlate a plurality of environmental sensor data to refine the task assigned to the user. A plurality of geographic profiles may also be created based on the environmental sensor data. Various embodiments allow a processor to be further configured creating a mapping of a task to the user may be derived using an algorithm or where the algorithm may be a statistical learning algorithm.

Principles of the invention allow for methods of an environmental event and task manager comprising receiving, at a processor, environmental sensor data from the external network, receiving, at the processor, dynamic user data from the external network, determining, at the processor, a task based on the environmental sensor data received from the external network, calculating, at the processor, a user fitness metric for a user named on the environmental sensor and dynamic user data received through the communications interface and user information from the memory, assigning, at the processor, the task to an assigned user based on the user fitness metric, and transmitting, at the processor, an alert to the assigned user.

Principles of the invention allow the method for an environmental event and task manager to be configured such that calculating the user information may include at least one of task completion ratio, capability, spatial distance, response time, current count, task completion ratio, task source, task score, user selection, or task type. According to various embodiments, this method may be further configured by updating a user profile using a plurality of the user fitness metrics.

Principles of the invention allow the method for an environmental event and task manager to be further configured by receiving environmental sensor data types by one of temperature, humidity, ambient light, sound, smoke, carbon monoxide, motion, non-conductive fluids, conductive fluids, power, vibration, or any combination thereof. This method may be further configured by correlating a plurality of environmental sensor data to refine the task assigned to the user. Creating a plurality of geographic profiles may also be accomplished based on the environmental sensor data. Various embodiments allow that the method may be further configured by creating a mapping of a task to the user using an algorithm or where the algorithm may be a statistical learning algorithm.

According to various embodiments, a system for an environmental event and task manager may comprise a plurality of environmental sensors configured to transmit environmental data through a network; one or more client devices configured to transmit dynamic user data, receive environmental and task data to the processing device; and a processing device configured to receive and process the environmental data, dynamic user data, and transmit tasks to one or more client devices.

BRIEF DESCRIPTION OF THE DRAWINGS

The accompanying drawings are not intended to be drawn to scale. In the drawings, each identical or nearly identical component that is illustrated in various figures is represented by a line numeral. For purposes of clarity, not every component may be labeled in every drawing. In the drawings:

FIG. 1 is a diagram of a system for an environmental event task manager in accordance with embodiments of the invention;
FIG. 2 is a diagram of a system for an environmental event task manager in accordance with embodiments of the invention;
FIG. 3 is a flow diagram of a process for an environmental event task manager in accordance with various embodiments of the invention;
FIG. 4 is a table depicting fitness metrics for users in accordance with various embodiments of the invention;
FIG. 5 is a diagram of a system for an environmental event task manager in accordance with embodiments of the invention;
FIG. 6 is a functional block diagram of a computer system that may be used in embodiments of the invention;
FIG. 7 is a functional block diagram of a storage system that may be used with the computer system of FIG. 6.

DETAILED SUMMARY

This invention is not limited in its application to the details of construction and the arrangement of components set forth in the following descriptions or illustrated by the drawings. The invention is capable of other embodiments and of being practiced or of being carried out in various ways. Also, the phraseology and terminology used herein is for the purpose of descriptions and should not be regarded as limiting. The use of "including," "comprising," "having," "containing," "involving," and variations herein, are meant to be open-ended, i.e. "including but not limited to."

In the emerging world of the Internet of Things (IoT) or more generally, Cyber Physical Systems (CPS), a convergence of multiple technologies is underway to allow the capture of information from a large array of physical end points or "things." These end points may be sensed or controlled remotely using existing network infrastructure and allow for efficient machine to machine and human to machine communication. During this communication as the network of "things" expands, an increasingly large amount of data will be generated and allow for correlations which have not been possible before. This information may be gathered in central locations and sorted by type of data. As the amount of data grows through the ever expanding IoT, so too does the available data. This large repository of data may be subsequently mined for data and trends on a wide variety of scales, from global to the very local and used by any number of devices for any variety of reasons. Data of this type may be called "Big Data" and in the current context may be used to provide pre-defined settings for a device, allow for prediction of tasks, or provide a superior experience to a user.

A substantial opportunity exists regarding applications for health and safety where the monitoring of local environments such as an apartment, home, or office space may be accomplished with relatively low cost and utilize existing infrastructure to the substantial benefit and well-being of the occupants. One advantage of this innovation is monitoring of an environment and dynamically allocating tasks to users to improve their security and safety in response to a current environmental condition. Through advanced learning mechanisms, this innovation recognizes these environmental conditions, monitors security and safety elements, and notifies individuals of the current situation and to complete tasks to mitigate against any future conditions.

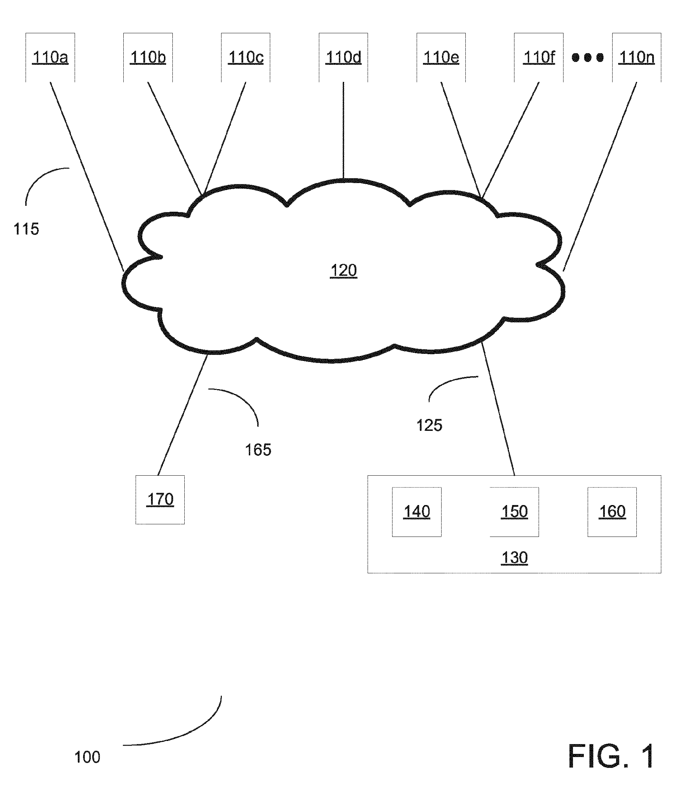

It should be appreciated that the amount of variability in systems designed to capture information and process same is enormous. FIG. 1 represents many exemplary systems with components to embody an environmental event task manager system **100**. A variety of sensors providing environmental monitoring may be used to provide the system with data. These sensors may detect temperature, humidity, ambient light, sound, smoke, carbon monoxide, motion, non-conductive fluids, conductive fluids, power, vibration, or any combination thereof for any environmental condition. Any number of these sensors may be deployed into an environment to monitor it thoroughly. As one of many such examples a series of conductive fluid detectors **110a**, **110b** may be deployed in rooms which contain plumbing fixtures which may leak. Smoke detectors **110c**, **110d** may be deployed in rooms which contain a capability for combustion. Carbon monoxide detection **110e** may be deployed in a space where such a health concern is elevated and a motion detector **110f** may be deployed in an entry way to determine occupancy. It should be appreciated that any sensor type may be used and not limited in number **110n**.

These sensors need not be geographically localized or logically grouped in any way to utilize embodiments of the invention. Grouping sensors geographically or logically may allow more economic use of the sensors. A geographic grouping such as in an apartment, home or office building may be accomplished, as well as logically locating sensors by function. One of many logical grouping examples may be locating conductive fluid detection sensors proximate to a source of water such as a boiler stack or sink to allow rapid detection of an unanticipated water event. It should be appreciated that the groupings of sensors may also be located on a very large geographic scale, even globally, where such global operations may be monitored through a sensor network located in any number of facilities around the globe. Any scale is possible from the very local (a single room or enclosure) to global where a large number of rooms or enclosures are monitored globally.

Each sensor **110a - 110n** is connected to a network **120** through a network connection **115**. This connection allows access to a cloud computing environment **120** and may also be gained by a variety of devices capable of connecting to such an environment in either a wired or wireless connection manner. These wired connection types may include, but are not limited to, any physical cabling method such as category 5 cable, coaxial, fiber, copper, twisted pair, or any other physical media to propagate electrical signals. Wireless connections may include, but are not limited to personal area networks (PAN), local area networks (LAN), Wi-Fi, Bluetooth, cellular, global, or space based communication networks.

Access between the cloud environment **120** and any other cloud environment is possible where these other cloud environments are configured to connect with devices similar to cloud environments such as the existing cloud **120**. It is well understood that the computing devices and connection types **110a - 110n**, **115**, **120** shown in FIG. **1** are intended to be illustrative only and that computing nodes and cloud computing environments may communicate with any type of computerized device over any type of network with addressable or direct connections.

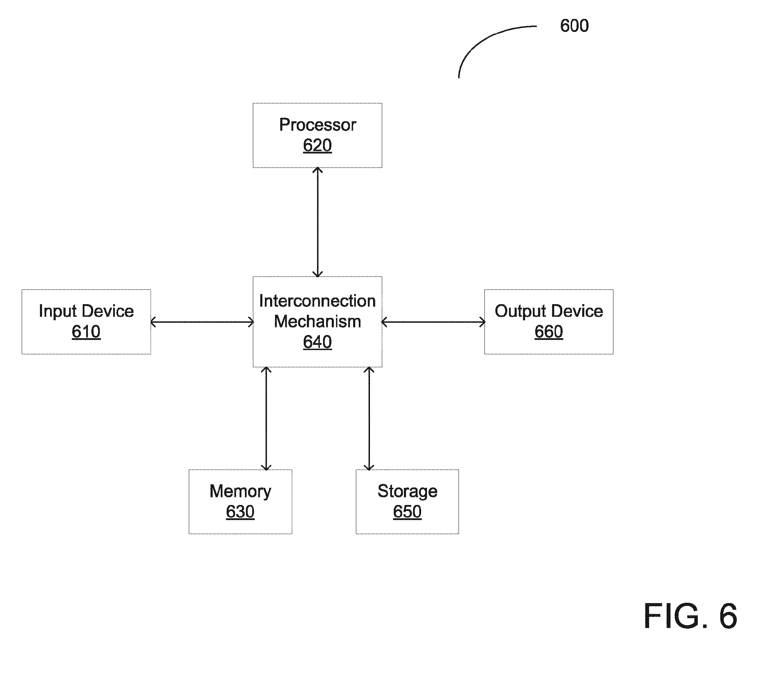

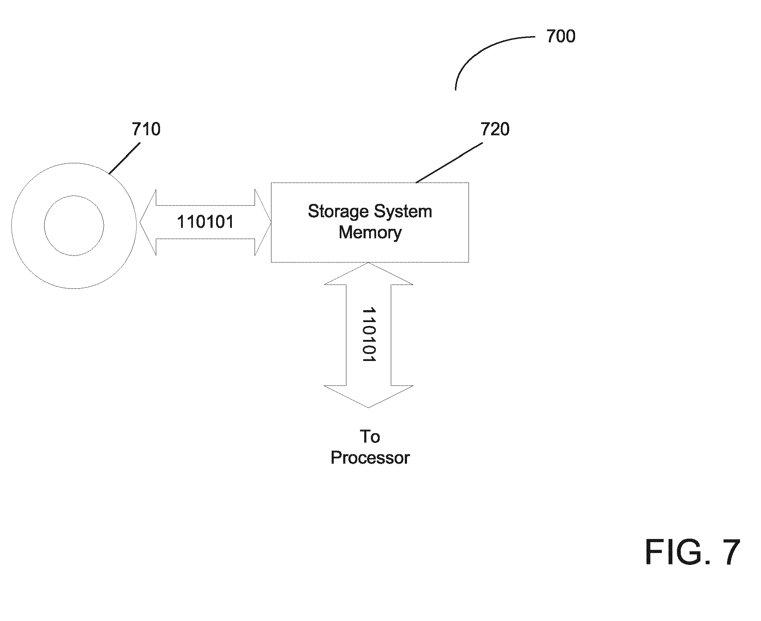

An environmental event and task manager may also contain a processing unit **130** which may consist of a processor **140**, communications interface **150**, and memory **160**. Network traffic travels from the cloud **120** to the environmental event task manager **100** through a network connection **125**. This processing unit **130**, may be part of a cloud environment, may be a standalone general purpose computer as detailed in FIG. **6** and FIG. **7**, or combination thereof. In one of many possible embodiments a communications interface **150** and processor **140** may exist in the same physical enclosure, but the memory **160** may exist in a separate location. There are many variations of such a processing unit **130** and these are known in the state of the art.

An environmental event and task manager may also contain one or more client devices **170** which are connected through a network connection **165**. Such a client device **170** may exist in several embodiments. Examples include but are not limited to, a general purpose computer system with an interface able to convey information to a user, Personal Data Assistant (PDA), Mobile Telephone, or any other wired or wireless device connected to a communications network **165** capable of receiving such a signal. Such devices, interfaces, and network types are well known in the state of the art and should not be limited in any way for such an application.

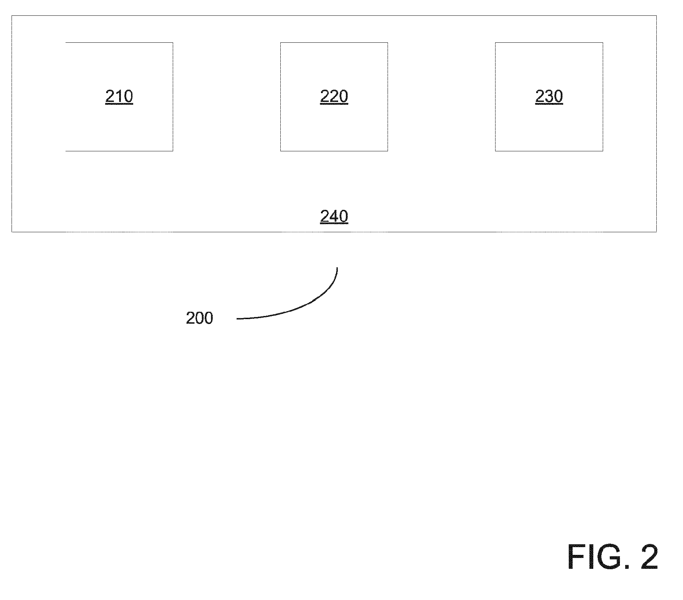

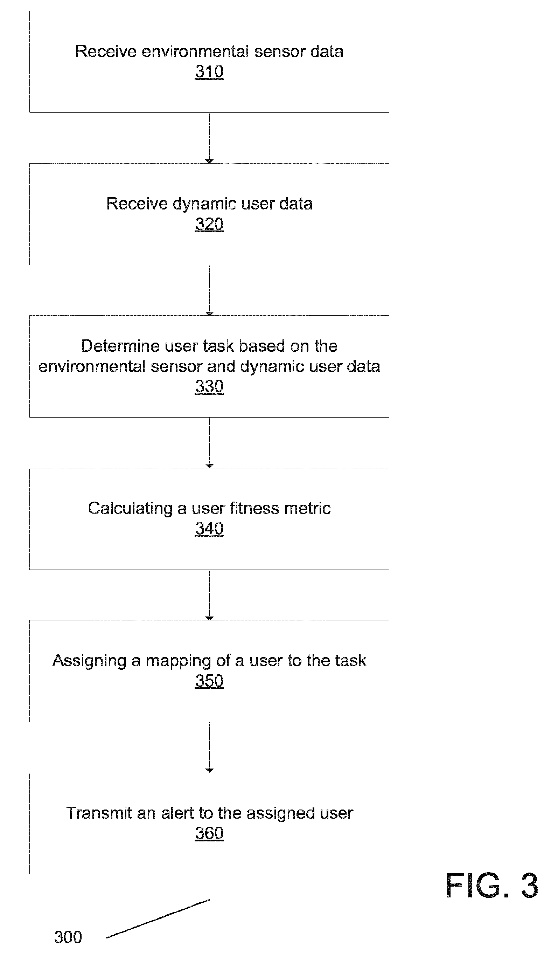

Turning now to FIG. **2**, a detailed view of various embodiments of the processing unit **200** are displayed. An environmental event and task manager may contain a processing unit **240** which may consist of a processor **210**, communications interface **220**, and memory **230**. Network traffic travels from any networked data source, to the environmental event task manager through a network connection and connected to the communications interface **220**. This processing unit **240**, may be a part of a cloud environment, may be a standalone general purpose computer as detailed in FIG. **6** and FIG. **7**, or any combination thereof. In one of many possible embodiments a communications interface **220** and processor **210** may exist in the same physical enclosure, but the memory **230** may exist in a separate location. Multiples of each component may exist to assist in collection of data, processing power, or storage capacity. All components may exist in separate locations, or the same physical enclosure. Many variations of such a processing unit **240** and are known in the state of the art and may generically be referred to as a "server." In various embodiments the processing device **200** may be seen as the device which coordinates the processing and data collection for the system. Various embodiments of the processing unit **200** perform the computational operations necessary to perform the various embodiments of the methods for environmental event task manager **300** shown in FIG. **3**.

Environmental data may be received on one or more environmental sensors **310**. These sensors may be capable of receiving a wide variety of environmental conditions that may include but are not limited to, temperature, humidity, ambient light, sound, smoke, carbon monoxide, motion, non-conductive fluid, conductive fluid, power, vibration, or any combination thereof. Other sensor types are possible in any number or combination. Environmental sensor data may be from one or more sensors in a single physical enclosure or distributed in an environment. Connection types, sensor types, or data rates of received information need not be synchronized or similar in nature as each sensor may act independently or in relation to other sensors. In one of many embodiments, a temperature sensor may provide data updates once per second, where a smoke detector need not provide a data input until an occurrence of smoke in a dwelling.

Dynamic user data is received **320** from one or more client device **170**. Various embodiments allow for real time information capture of an individual pertaining to a user such as capability, where an individual user may have inherent capabilities to deal with particular tasks which may change over time. As one of many examples, particular users may not be able to unlock a particular door, but when given the correct access code are then able to do so, thereby giving rise to a change in capability. Spatial distance to an event and user selection (where a user volunteers to undertake a task) may be other possible examples of data from a user that is dynamic in nature and able to be received by the processing unit **130**, **240**. Embodiments of the invention will attempt to acquire the most current user data at all times for all users before calculating the fitness of a particular user **340** and subsequently assigning a mapping of a user to a task **350**. In various embodiments client devices **170** such as mobile devices may receive a notification (sometimes named a "silent push") such that the user is not aware and obtain device location. If such a notification is not available, other methods of determining location may be accomplished using common social media applications which determine last known geographic location. Examples include Application Programming Interface (API) calls from social media applications such as Twitter, Facebook, or similar among others which may provide geographic location information and other dynamic data. It should be appreciated methods to receive such information exist and are widely used in the state of the art.

Determining a user task based on the environmental sensor and dynamic user data **330** occurs through the analysis both of the environmental sensor data received **310** and dynamic user data received **320** and may be accomplished from one or more sensors and one or more users. In one embodiment, particular sensors may allow for creation of a user task from a single type of sensor input for a single user. One of many examples may be a non-conductive fluid sensor where the activation of such a sensor may indicate a leak, which will transmit a task to the user to verify if such a leak exists.

In another embodiment, multiple sensors data are correlated with each other that may further define the type of event occurring and thereby better define a user task. One embodiment of many may be an elevated temperature reading along with a detection of smoke. A presence of both of these sensor inputs may be used to determine a fire at the location of the sensors and the appropriate user task to phone the fire department. This sensor data is coupled with the dynamic user data to determine who may be the closest user to a serious environmental event or what capabilities a user has to deal with such an event. As one of many examples, such serious events may ultimately be received by adults as the most capable and intentionally do not alert anyone, such as children, who may be put in danger by responding. Further embodiments are possible with the plurality of sensor data types and plurality of users and user data available, thereby allowing a wide range of possible user tasks from the large amount of sensor and user data available in near real time and stored.

Calculating user fitness **340** may be accomplished by taking into consideration several fitness characteristics in conjunction with the determined task **330** and learned history of the system. Such fitness characteristics may include but are not limited to, task completion ratio, capability, spatial distance, response time, current count, task source, task score, user selection, task type, or any combination thereof which may create unique fitness characteristics. In various embodiments a user profile is updated using a plurality of the user fitness metrics.

Task completion ratio may maintain in memory the ratio of completed tasks to incomplete tasks for each user within the system. Capability may maintain an individual or group of users' capabilities within the environment in memory. Spatial distance may maintain the current location of the user with respect to the determined user task. Response time may maintain a user response time to an event where the user response time may be updated on a continuous, periodic, or predetermined basis with the possibility of separate estimates maintained for the different types of tasks. Current count may maintain a current number of tasks allocated to users where each task assigned may increase an associated inconvenience metric for that user. Task source may maintain geographic location or source. Task score may be a configurable parameter which may allow an administrator of a system to weight the types of tasks. This may also be calculated automatically by the system itself depending, in one of many embodiments, on the number of times a task has been rejected in the past. User selection may allow for an individual user to "volunteer" for a particular task, type of task, or all or no tasks. Task type may allow the type of the task allocated to a person such as actuation or sensory. Various exemplary embodiments exist using permutations of the detailed and other user metrics.

User fitness is generated for all registered users of the system. It should be appreciated a single optimal user may be chosen or multiple optimal users. Further, if no user is available and a task is not urgent, principles of the invention allow for no user to be notified so as to not flood a user with information they may not act on. Various embodiments take unnecessary notification of a user into account and suppress such notifications. Various embodiments allow the system to be variably sized based on how a user configures the system. Examples include a system as a single environmental sensor, or a plurality of environmental sensors which are widely geographically dispersed such as a multi-national corporation. Similarly the number of users may be singular or a plurality of users. A user may create an account with sensors at any location attached to it, and a plurality of users may be associated to the same sensor set allowing the associated users to the group of sensors. It should be appreciated that principles of the invention allow for a very large amount of users and environmental sensors with the ability to configure these and other variables within the system to create a robust Environmental Event and Task Manager.

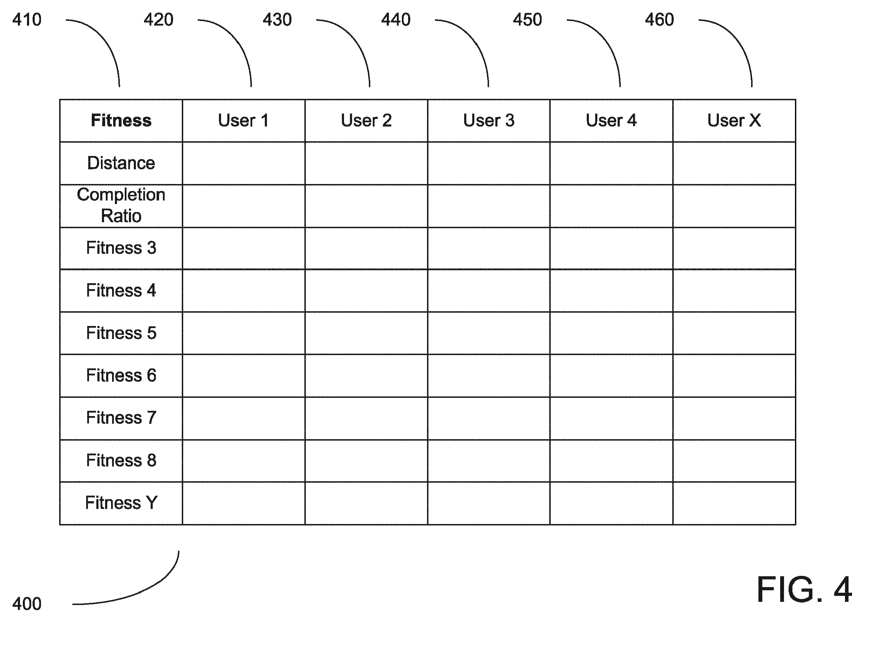

FIG. **4** illustrates a table depicting fitness metrics for users in accordance with various embodiments of the invention. A table of user fitness **400** may exist in a memory within the system and catalog individual fitness metrics **410** detailed supra, elements to this table may be static, dynamic, discrete, measured, calculated, real time, periodic, system provided, user provided, or some combination thereof. Embodiments of the invention demonstrate a user fitness table **400** may exist in a wide variety of forms known to the state of the art. Also depicted may be the individual users to a system. It should be appreciated a system may have one **420** or more users **430 - 460**. There is no limit implied to the number of users a system may maintain. Maintenance of this table may be used as a basis for assigning a user to a task **350**.

Assigning a mapping of a user to a task **350** may occur after environmental sensor data is received **310**, dynamic user data is received **320**, a user task is determined **330**, and user fitness calculated **340**. Various embodiments of the invention allow assigning a user to a task manually by an administrator of the system or utilizing the calculated user fitness metric **340** from the user fitness table **400**. It should be appreciated while an optimal task to user mapping may be obtained; such an optimization may vary based on the environmental event, user data, task data, user fitness metrics, or any combination thereof and an optimal result need not be utilized to assign a task to a user. It should be appreciated, various embodiments allow for an iterative and experiential nature of the methods for environmental event task manager **300** shown in FIG. **3**. As such what may be considered optimal at one point may not be optimal at a different point as the data that may provide input to the assignment may be dynamic and not periodic in nature.

Principles of the invention may use experiential learning methods to approximate over time the likelihood that a user will execute a task successfully thereby affecting future mapping assignments. Embodiments of the invention may continuously refine its knowledge of the users to determine an assignment of tasks to users over time. This involves selecting a user for a particular task and subsequently observing their performance on that task and updating the users' fitness over time.

Such embodiments may operate as follows:

- $I$ - is the set of all users willing and actively executing tasks within the system
- $T$ - is the set of all possible tasks within the system
- $p(.|t,i)$, defines the probability that task $t$ will be completed by individual $i$

Principles of the invention demonstrate utilizing statistical learning algorithms, a probabilistic mapping $p$ from a task $t$ to each individual $i$ in the set of all individuals $I$; these probabilities may then be computed and ordered to find the optimum individual for each task in order to maximize the task completion ratio. It should be appreciated a number of methods or combination of methods could be used to learn such behaviors. In the system, each allocated task may result in one of two possible outcomes, "completed" or "rejected". For completed tasks the user communicates with the "task manager" that they have completed the task and provides information where applicable. For rejected tasks, the user may state upon receiving the task that they cannot complete the task or alternatively a timeout on the task may elapse. Each of these outcomes represents the termination of a learning trial, upon which a multinomial distribution is updated.

One embodiment utilized applies a Bayesian Inference to learn this hidden binomial distribution through direct observations over time. Bayesian model learning involves wrapping up Bayes rule into an algorithmic update mechanism in order approximate a binomial governing the likelihood a given individual $i$ will complete or reject a given task $t$. The posterior probability $P'(X = x|e)$ denoting the probability that a random variable x has a probability X given experience e may be computed via:

$$P(Y|X) = \frac{P(X|Y)P(Y)}{P(X)}$$

A conditional probability is required P(X|Y) and two unconditional probabilities (P(Y), P(X)) to compute a single posterior conditional probability P(Y|X). As a prior probability, one may adopt an equi-probable prior posterior distribution over parameters in an iterative manner.

In order to approximate the multinomial distributions governing the task assignment process an update mechanism is required. A simplification of Bayes rule we may update the posterior probabilities based on observations using the below equations. This approach involves maintaining an experience counter "Expc" for each state. A state *s* consists of a conjunction of a number of fitness metrics detailed supra, such as but not limited to task type, capability, spatial distance, response time, etc. Any information which improves the predictive power of the approach to make better estimations as to the likelihood of a user successfully completing a task should be included. Each time a task t ∈ T is generated, an observation is made to determine the current environmental state *s*. Outcomes observed while "in" a particular state should repeat and over time it may be possible to learn this behavior.

Users are chosen from the population to complete tasks based on a policy π. Many choices of policy are possible known to the state of the art, including but not limited to, Softmax selection or unbiased sampling, where merits of each policy may vary depending on the specific problem. Alternate embodiments may utilize a ε - greedy which balances exploration and exploitation by choosing the best mapping (task to user) most of the time except for some small amount of time (where ∈ = 0.1) when it chooses a non-greedy action, with respect to likelihood.

$$P'(r = r'|(t,i), s = s) = \frac{P(r = r'|(t,i), s = s) \times Expc + 1}{Expc'}$$

$$P'(r = r'|(t,i), s = s) = \frac{P(r = r'|(t,i), s = s) \times Expc}{Expc'}$$

Once a task is assigned to a user, a result *r* is generated following the task's completion or rejection. Quality of the task completed may also be considered. As one of many illustrative examples, a simple Bayesian update rule is shown where the posterior probability *P'*, a conditional probability is generated by observing the result after allocating task *t* to individual *i*. Illustrated equations ensure the alternative results sum the total probability to 1.

It should be appreciated various embodiments exist and over time principles of the invention build up an approximation of the likely causes of the tasks being rejected or successful when allocated to a particular user given that user's current state.

Embodiments of the invention also incorporate a form of macro learning which learns trends about the type of information the user is interested in, for example, but not limited to, task types a user is likely to complete. A feedback mechanism is utilized to record users' responses to information. As one of many examples, if a user consistently ignores security sensory requests, such as from a motion sensor; the system learns that the user is not interested in such events and the system may not send any further tasks. It should be appreciated; this type of macro learning may be applied to all data and users within the system.

Once the user task **330**, user fitness **340**, and assignment of the task to the user **350** are determined, an alert may be transmitted to a user **360**. This transmission may occur from the processing unit **130**, **240** through the communications interface **150** via the network **125**, **120**, **165** to the client device **170**. In an alternate embodiment the processing unit itself **130**, **240** may serve as the client in the absence or in addition to other clients. In several exemplary embodiments user alerts are transmitted to client devices such as wireless handheld devices to allow a user immediate notification to a task request. Methods for "pushing" data such as user alerts **360** to such devices are multitudinous in the state of the art. These client devices **170** need not be wireless or handheld in nature to receive such alerts. It should be appreciated any computer system capable of receiving data may be capable of receiving such an alert.

Various embodiments may allow for "gamification" methods, where users are awarded points for successfully completing a range of tasks. This may be a configurable part of the system where different scores may be awarded for differing priority tasks. Users may unlock different privileges with the more points scored through their activities. One of many possible end goals is to build up a score over a time period at the end of which an award is given to the highest scorer. This may be a recurring process where the award may always desirable; no matter how many times it is received. In other embodiments a system may alter a task priority for certain critical locations with respect to security and safety. As one of many examples, a laboratory may contain certain hazards requiring the occupants to be more vigilant. An ability to increase priority for tasks completed in these locations to encourage greater awareness is possible. A system may also adjust the points for a given task depending on its type and past performance. A system may adjust the task score where the rejection count is high to increase the probability that the task will be successfully completed.

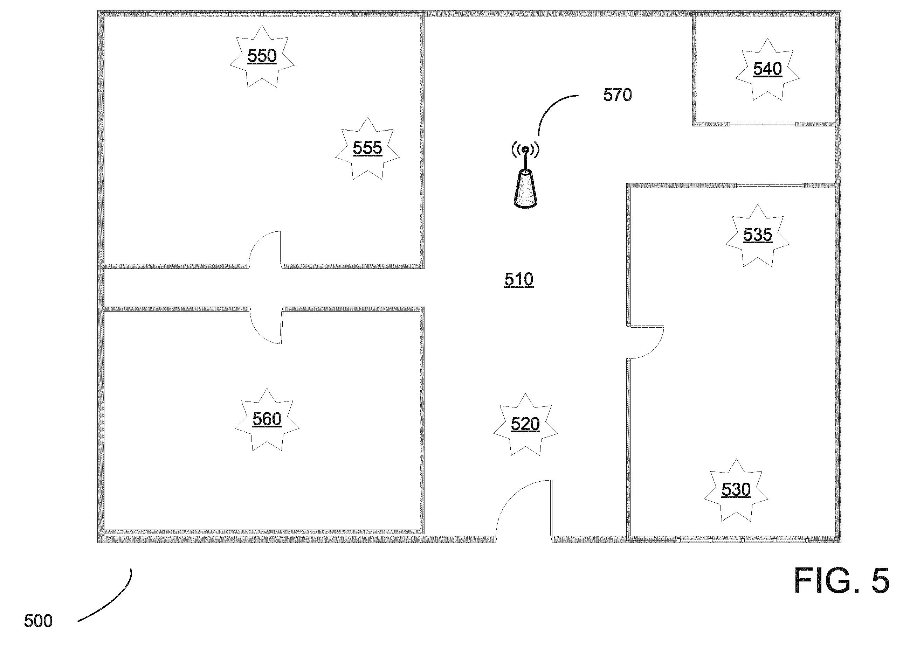

Several exemplary embodiments in context are illustrated in FIG. **5**, **500**. A dwelling **510** may have several environmental sensors of varied types deployed in various locations throughout the dwelling. It should be appreciated a dwelling **510** may take on any variety of configurations such as a home, apartment, office space, or similar and should not be limited to the configuration illustrated in FIG. **5**.

Within the dwelling **510** various sensors are deployed such as a motion sensor **520**, **530, 550**, temperature sensor **535**, conductive fluid sensor **540**, and smoke sensor **555**, **560**. It should be appreciated multiple sensors may be co-located at the same location and of any type or quantity. In one of many embodiments a single sensing unit may contain environmental sensors such as temperature, humidity, ambient light, sound, smoke, carbon monoxide, motion, non-conductive fluids, conductive fluids, power, vibration, or any combination thereof within a single enclosure and transmit information to an external network. A wired or wireless network gateway **570** exists within the dwelling **510** to receive the environmental sensor data from the environmental sensors and transmit to the external network. Each individual environmental sensor or collection of environmental sensors may have the ability to transmit data through a communications interface in a wired or wireless fashion.

In one embodiment a motion sensor may be in a main hall of a dwelling **520** which senses motion, possibly indicating an intruder, data would be sent to an external interface through a local network gateway **570** to an external network **120** and processed by the processing unit **130**, **240**. Any resulting tasks routed to appropriate users may traverse these same networks from the processing unit **130**, **240**, through a network **125**, **120**, **165**, to the assigned client **170**. While single environmental sensors may be used to determine tasks, a correlation of a plurality of environmental sensors may be possible to refine the environmental event and subsequently the task assigned to the user. As one of many examples, from FIG. **5**, data from a temperature sensor **535** and motion sensor **530** may be used to determine if a window is open as temperature in the room may change dramatically and motion is detected possibly from curtains blow in the wind. These conditions may give rise to a low risk scenario that a window may have inadvertently been left open and a user should remedy same when able. If however a temperature is stable over a period of time, and motion is detected when no one is expected to be home, this may give rise to a serious event which may include an intruder which has breached the window the motion sensor is obtaining data from.

Serious conditions may also occur if a conductive fluid is detected by such a sensor **540**, such as water. Again by correlating sensors one may be able to determine if a dishwasher has leaked during a wash cycle scheduled to occur when occupants are not in the dwelling, which may give rise to the task of a user coming home and shutting off the dishwasher. Other situations are possible through correlating multiple sensors as well, where water may be detected from a conductive fluid sensor **540**, however coupled with a sharp temperature increase **535**, and the detection of smoke **555**, **560**, may give rise to the very serious event of a fire in the dwelling where the sprinkler system has been deployed which may give rise to tasks, some of which may be automated, for example to alert the fire department, or inform all users to stay clear of the dwelling. Various embodiments allow for the processor to be further configured to correlate a plurality of environmental sensor data to refine the task assigned to the user. It should be appreciated with the wide range of environmental sensors that may be deployed in any configuration, into a dwelling or other such building or enclosure, without regard to occupancy, in a myriad of configurations, a substantial number of unique events can be monitored, correlated, and subsequent tasks can be assigned to users.

It should be appreciated that while various embodiments may result in action to be taken by a user for an environmental event and subsequent resulting task, it should also be appreciated that portions of the system itself may autonomously take the physical action. From above, a serious condition may occur if a conductive fluid is detected by a sensor **540**, such as water. One may be able to determine if a dishwasher has leaked during a wash cycle scheduled to occur when occupants are not in the dwelling, which may give rise to the task of a user coming home and shutting off the dishwasher. In an autonomous case however, such a dwelling may contain an autonomous control for shutting off the water completely in the dwelling which may be commanded to close on the assignment of such an event. While such automated control systems, such as shut off valves, thermostats, fire control systems, lighting control, among several others, are available and known in the state of the art, principles of the invention may allow for their use in conjunction with systems and methods for an environmental event task manager which may allow for physical control within the environment.

Principles of the invention may also allow for the collection of the environmental sensor data, dynamic user data, determined tasks based on the environmental data and dynamic user data, calculated user fitness metric, assigned tasks, or assigned users to create profiles which may be used to create predetermined profiles for users of the environmental event and task manager. These predetermined profiles may be stored in the memory on the environmental event and task manager or other memory device, including but not limited to a central memory repository and made available to all, some, or a few users. Various embodiments may deploy these predetermined profiles automatically to users based on geography, sensor configuration, user configuration, or any combination thereof. As one of many possible examples, a geographic profile may be pre-loaded into memory to take advantage of local context. For example, a particular geographic location may require particular energy savings measures and such a profile may be pre-loaded to provide same without intervention of the user. These profiles may be generated by data which may be collected from other Environmental Event and Task Managers, or any other data sources, including "Big Data" sources for the geographic location, thereby providing for the most accurate representation for these profiles. Principles of the invention allow these profiles to evolve over time based on the data available from other Environmental Event and Task Managers, or any other data sources, including "Big Data." Various embodiments also allow for correlation and creation of profiles not only on dependence with geography, but other learning may be accomplished based on other dependencies such as, but not limited to, age groups, sensor types, capability, spatial distance, response time, current count, task completion ratio, task source, task score, user selection, task type or any combination thereof. It should be appreciated these predetermined profiles are not limited to only the examples described herein and base themselves in the available data from any available source.

Any computer systems used in various embodiments may be, for example, general-purpose computers such as those based on Intel PENTIUM-type processor, Motorola PowerPC, Sun UltraSPARC, Hewlett-Packard PA-RISC processors, or any other type of processor.

For example, various embodiments of the invention may be implemented as specialized software executing in a general-purpose computer system **600** such as that shown in FIG. **6**. The computer system **600** may include a processor **620** connected to one or more memory devices **630**, such as a disk drive, memory, or other device for storing data. Memory **630** is typically used for storing programs and data during operation of the computer system **600**. The computer system **600** may also include a storage system **650** that provides additional storage capacity. Components of computer system **600** may be coupled by an interconnection mechanism **640**, which may include one or more busses (e.g., between components that are integrated within the same machine) and/or a network (e.g., between components that reside on separate discrete machines). The interconnection mechanism **640** enables communications (e.g., data, instructions) to be exchanged between system components of system **600**.

Computer system **600** also includes one or more input devices **610**, for example, a keyboard, mouse, trackball, microphone, touch screen, and one or more output devices **660**, for example, a printing device, display screen, speaker. In addition, computer system **600** may contain one or more interfaces (not shown) that connect computer system **600** to a communication network (in addition or as an alternative to the interconnection mechanism **640**).

The storage system **650**, shown in greater detail in FIG. **7**, typically includes a computer readable and writeable nonvolatile recording medium **710** in which signals are stored that define a program to be executed by the processor or information stored on or in the medium **710** to be processed by the program to perform one or more functions associated with embodiments described herein. The medium may, for example, be a disk or flash memory. Typically, in operation, the processor causes data to be read from the nonvolatile recording medium **710** into another memory **720** that allows for faster access to the information by the processor than does the medium **710**. This memory **720** is typically a volatile, random access memory such as a dynamic random access memory (DRAM) or static memory (SRAM). It may be located in storage system **700**, as shown, or in memory system **630**. The processor **620** generally manipulates the data within the integrated circuit memory **630**, **720** and then copies the data to the medium **710** after processing is completed. A variety of mechanisms are known for managing data movement between the medium **710** and the integrated circuit memory element **630**, **720**, and the invention is not limited thereto. The invention is not limited to a particular memory system **630** or storage system **650**.

The computer system may include specially-programmed, special-purpose hardware, for example, an application-specific integrated circuit (ASIC). Aspects of the invention may be implemented in software, hardware or firmware, or any combination thereof. Further, such methods, acts, systems, system elements and components thereof may be implemented as part of the computer system described above or as an independent component.

Although computer system **600** is shown by way of example as one type of computer system upon which various aspects of the invention may be practiced, it should be appreciated that aspects of the invention are not limited to being implemented on the computer system as shown in FIG. 7. Various aspects of the invention may be practiced on one or more computers having a different architecture or components shown in FIG. 7. Further, where functions or processes of embodiments of the invention are described herein (or in the claims) as being performed on a processor or controller, such description is intended to include systems that use more than one processor or controller to perform the functions.

Computer system **600** may be a general-purpose computer system that is programmable using a high-level computer programming language. Computer system **600** may be also implemented using specially programmed, special purpose hardware. In computer system **600**, processor **620** is typically a commercially available processor such as the well-known Pentium class processor available from the Intel Corporation. Many other processors are available. Such a processor usually executes an operating system which may be, for example, the Windows 95, Windows 98, Windows NT, Windows 2000 (Windows ME) or Windows XP or Vista operating systems available from the Microsoft Corporation, MAC OS System X operating system available from Apple Computer, the Solaris operating system available from Sun Microsystems, or UNIX operating systems available from various sources. Many other operating systems may be used.

The processor and operating system together define a computer platform for which application programs in high-level programming languages are written. It should be understood that embodiments of the invention are not limited to a particular computer system platform, processor, operating system, or network. Also, it should be apparent to those skilled in the art that the present invention is not limited to a specific programming language or computer system. Further, it should be appreciated that other appropriate programming languages and other appropriate computer systems could also be used.

One or more portions of the computer system may be distributed across one or more computer systems coupled to a communications network. For example, as discussed above, a computer system that determines available power capacity may be located remotely from a system manager. These computer systems also may be general-purpose computer systems. For example, various aspects of the invention may be distributed among one or more computer systems configured to provide a service (e.g., servers) to one or more client computers, or to perform an overall task as part of a distributed system. For example, various aspects of the invention may be performed on a client-server or multi-tier system that includes components distributed among one or more server systems that perform various functions according to various embodiments of the invention. These components may be executable, intermediate (e.g., IL) or interpreted (e.g., Java) code which communicate over a communication network (e.g., the Internet) using a communication protocol (e.g., TCP/IP). For example, one or more database servers may be used to store device data, such as expected power draw, that is used in designing layouts associated with embodiments of the present invention.

It should be appreciated that the invention is not limited to executing on any particular system or group of systems. Also, it should be appreciated that the invention is not limited to any particular distributed architecture, network, or communication protocol.

Various embodiments of the present invention may be programmed using an object-oriented programming language, such as SmallTalk, Java, C++, Ada, or C# (C-Sharp). Other object-oriented programming languages may also be used. Alternatively, functional, scripting, and/or logical programming languages may be used. Various aspects of the invention may be implemented in a non-programmed environment (e.g., documents created in HTML, XML or other format that, when viewed in a window of a browser program render aspects of a graphical-user interface (GUI) or perform other functions). Various aspects of the invention may be implemented as programmed or non-programmed elements, or any combination thereof.

Embodiments of a systems and methods described above are generally described for use in relatively large data centers having numerous equipment racks; however, embodiments of the invention may also be used with smaller data centers and with facilities other than data centers. Some embodiments may also be a very small number of computers distributed geographically so as to not resemble a particular architecture.

In embodiments of the present invention discussed above, results of analyses are described as being provided in real-time. As understood by those skilled in the art, the use of the term real-time is not meant to suggest that the results are available immediately, but rather, are available quickly giving a designer the ability to try a number of different designs over a short period of time, such as a matter of minutes.

Having thus described several aspects of at least one embodiment of this invention, it is to be appreciated various alterations, modifications, and improvements will readily occur to those skilled in the art. Such alterations, modifications, and improvements are intended to be part of this disclosure, and are intended to be within the spirit and scope of the invention. Accordingly, the foregoing description and drawings are by way of example only.

**Claims**

1. An environmental event and task manager, comprising:

   a communications interface configured to communicate with an external network;
   a memory capable of storing user information for a plurality of users; and
   a processor in communication with the communications interface and memory, the processor configured to:

      receive environmental sensor data from the external network;
      receive dynamic user data from the external network;
      determine a task based on the environmental sensor data and dynamic user data received from the external network;
      calculate a user fitness metric for a user named on the environmental sensor data received through the communications interface and user information from the memory;
      assign the task to an assigned user based on the user fitness metric; and
      transmit an alert to the assigned user.

2. The environmental event and task manager of claim 1, wherein the user information includes at least one of capability, spatial distance, response time, current count, task completion ratio, task source, task score, user selection, or task type.

3. The environmental event and task manager of claim 1, wherein the processor is further configured to update a user profile using a plurality of the user fitness metrics.

4. The environmental event and task manager of claim 1, wherein the processor is further configured to receive environmental sensor data types by one of temperature, humidity, ambient light, sound, smoke, carbon monoxide, motion, non-conductive fluids, conductive fluids, power, vibration, or any combination thereof.

5. The environmental event and task manager of claim 1, wherein the processor is further configured to correlate a plurality of environmental sensor data to refine the task assigned to the assigned user.

6. The environmental event and task manager of claim 1, wherein the processor is further configured to create a plurality of geographic profiles are based on the environmental sensor data.

7. The environmental event and task manager of claim 1, wherein the processor is further configured to create a mapping of a task to the user using an algorithm.

8. The environmental event and task manager of claim 7, wherein the algorithm is a statistical learning algorithm.

9. A method for an environmental event and task manager, comprising:

   receiving, at a processor, environmental sensor data from the external network;
   receiving, at the processor, dynamic user data from the external network;
   determining, at the processor, a task based on the environmental sensor and dynamic user data received from the external network;

   calculating, at the processor, a user fitness metric for a user named on the environmental sensor data received through the communications interface and user information from the memory; and
   assigning, at the processor, the task to an assigned user based on the user fitness metric; and
   transmitting, at the processor, an alert to the assigned user.

10. The method for an environmental event and task manager of claim 9, wherein calculating the user fitness metric uses at least one of capability, spatial distance, response time, current count, task completion ratio, task source, task score, user selection, or task type.

11. The method for an environmental event and task manager of claim 9, further comprising updating a user profile using a plurality of the user fitness metrics.

12. The method for an environmental event and task manager of claim 9, wherein environmental sensor data type received is one of temperature, humidity, ambient light, sound, smoke, carbon monoxide, motion, non-conductive fluids, conductive fluids, power, vibration, or any combination thereof.

13. The method for an environmental event and task manager of claim 9, wherein the assigned user task is further refined by a plurality of environmental sensor data.

14. The method for an environmental event and task manager of claim 9, wherein receiving the environmental sensor data creates a plurality of geographic profiles.

15. The method for an environmental event and task manager of claim 9, wherein creating a mapping of a task to the user is derived using an algorithm.

FIG. 1

210

220

230

240

200

FIG. 2

Receive environmental sensor data
310

Receive dynamic user data
320

Determine user task based on the
environmental sensor and dynamic user data
330

Calculating a user fitness metric
340

Assigning a mapping of a user to the task
350

Transmit an alert to the assigned user
360

FIG. 3

300

| Fitness | User 1 | User 2 | User 3 | User 4 | User X |
|---|---|---|---|---|---|
| Distance | | | | | |
| Completion Ratio | | | | | |
| Fitness 3 | | | | | |
| Fitness 4 | | | | | |
| Fitness 5 | | | | | |
| Fitness 6 | | | | | |
| Fitness 7 | | | | | |
| Fitness 8 | | | | | |
| Fitness Y | | | | | |

410  420  430  440  450  460

400

FIG. 4

EP 3 166 056 A1

FIG. 5

600

```
            ┌──────────────┐
            │  Processor   │
            │     620      │
            └──────┬───────┘
                   ↕
┌──────────────┐  ┌──────────────┐  ┌──────────────┐
│ Input Device │↔ │Interconnection│↔ │Output Device │
│     610      │  │  Mechanism   │  │     660      │
└──────────────┘  │     640      │  └──────────────┘
                  └──┬───────┬───┘
                     ↕       ↕
              ┌──────────┐ ┌──────────┐
              │  Memory  │ │ Storage  │
              │   630    │ │   650    │
              └──────────┘ └──────────┘
```

FIG. 6

FIG. 7

Europäisches
Patentamt

European
Patent Office

Office européen
des brevets

## EUROPEAN SEARCH REPORT

Application Number

EP 16 19 6404

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/044539 A1 (SABOL BRYAN [US] ET AL) 1 March 2007 (2007-03-01) * page 3, paragraph 40 * * page 5, paragraph 52 * * page 11, paragraphs 110,111 * * figures 1a,2,3 * | 1-15 | INV. G06Q10/06 G06Q90/00 |
| X | US 2015/134761 A1 (SHARMA SANDEEP [US] ET AL) 14 May 2015 (2015-05-14) * page 8, paragraph 73 - page 9, paragraph 76 * | 1-15 | |

TECHNICAL FIELDS
SEARCHED (IPC)

G06Q

The present search report has been drawn up for all claims

| Place of search | Date of completion of the search | Examiner |
|---|---|---|
| The Hague | 30 January 2017 | Arbutina, Ljiljana |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

......................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 16 19 6404

This annex lists the patent family members relating to the patent documents cited in the above-mentioned European search report.
The members are as contained in the European Patent Office EDP file on
The European Patent Office is in no way liable for these particulars which are merely given for the purpose of information.

30-01-2017

| Patent document cited in search report | | | Publication date | Patent family member(s) | | Publication date |
|---|---|---|---|---|---|---|
| US 2007044539 | A1 | | 01-03-2007 | US 2007044539 A1 | | 01-03-2007 |
| | | | | US 2007222585 A1 | | 27-09-2007 |
| | | | | WO 2007046844 A2 | | 26-04-2007 |
| US 2015134761 | A1 | | 14-05-2015 | CN 105723684 A | | 29-06-2016 |
| | | | | EP 3069497 A1 | | 21-09-2016 |
| | | | | KR 20160086364 A | | 19-07-2016 |
| | | | | US 2015134761 A1 | | 14-05-2015 |
| | | | | WO 2015073722 A1 | | 21-05-2015 |

EPO FORM P0459

For more details about this annex : see Official Journal of the European Patent Office, No. 12/82